# FASCICULE DE BREVET EUROPEEN

(11) **EP 4 073 354 B1**
(45) Date de publication et mention de la délivrance du brevet: **13.09.2023**
(21) Numéro de dépôt: 20828663.3
(22) Date de dépôt: 01.12.2020
(51) Int. Cl.: F01D 11/02, F01D 25/18, F02C 3/067, F02C 7/06, F02C 7/28, F02C 7/36, F02K 3/06

(54) **PRESSURISATION D'ENCEINTES DE LUBRIFICATION DANS UNE TURBOMACHINE A TURBINE CONTRAROTATIVE**
UNTERDRUCKSETZUNG VON SCHMIERKAMMERN IN EINER TURBOMASCHINE MIT GEGENLÄUFIGER TURBINE
PRESSURISING OF LUBRICATION CHAMBERS IN A TURBOMACHINE WITH COUNTER-ROTATING TURBINE

(30) Priorité: 10.12.2019 FR 1914017
(43) Date de publication de la demande: 19.10.2022
(73) Titulaire: SAFRAN AIRCRAFT ENGINES, 75015 Paris (FR)
(72) Inventeur: LEVISSE, Paul Ghislain Albert, 77550 MOISSY-CRAMAYEL (FR); BELMONTE, Olivier, 77550 MOISSY-CRAMAYEL (FR); CATY, Fabien Roger Gaston, 77550 MOISSY-CRAMAYEL (FR); CHASSAGNE, Amélie Argie Antoinette, 77550 MOISSY-CRAMAYEL (FR)
(74) Mandataire: Gevers & Orès
(86) Numéro de dépôt international: PCT/FR2020/052230
(87) Numéro de publication internationale: WO 2021/116556

(56) Documents cités:
- EP-A2- 2 820 280
- WO-A1-2017/158296
- US-A1- 2018 223 732
- US-A1- 2019 085 701

## Description

### Domaine technique de l'invention

La présente invention concerne une turbomachine à turbine contrarotative pour un aéronef, cette turbomachine comportant des circuits de pressurisation de joints d'étanchéité d'enceintes de lubrification, en particulier de paliers.

### Arrière-plan technique

L'arrière-plan technique comprend notamment les documents US-A1-2019/085701, US-A1-2018/223732, EP-A2-2 820 280 et WO-A1-2017/158296.

De manière classique, une turbomachine d'aéronef comprend d'amont en aval, dans le sens d'écoulement des gaz, une soufflante, un compresseur basse pression, un compresseur haute pression, une chambre annulaire de combustion, une turbine haute pression et une turbine basse pression. Le rotor du compresseur basse pression est entraîné par le rotor de la turbine basse pression, et le rotor du compresseur haute pression est entraîné par le rotor de la turbine haute pression.

D'un point de vue performance moteur et consommation, il est avantageux de maximiser la vitesse de rotation de la turbine basse pression car cela permet d'obtenir un meilleur rendement de la turbine. Cependant, augmenter la vitesse de rotation de la turbine implique d'augmenter les efforts centrifuges qu'elle subit, et complique donc fortement sa conception.

Une suggestion pour augmenter le rendement d'une turbine sans pour autant augmenter sa vitesse de rotation consiste à utiliser une turbine contrarotative. La turbine basse pression est alors remplacée par une turbine à deux rotors dont un premier rotor est configuré pour tourner dans un premier sens de rotation et est relié à un premier arbre de turbine, et un second rotor est configuré pour tourner dans un sens opposé de rotation et est relié à un second arbre de turbine. Le premier rotor comporte des roues de turbine intercalées entre des roues de turbine du second rotor.

Une turbine basse pression peut avoir une vitesse de rotation au décollage de l'ordre de 4.000 tours par minute dans une architecture classique où la turbine entraine directement la soufflante ou une vitesse de rotation au décollage de l'ordre de 10.000 tours par minute dans une architecture où la turbine entraine la soufflante par l'intermédiaire d'un réducteur. Son remplacement par une turbine contrarotative dont les rotors tournent respectivement à des vitesses au décollage de l'ordre de 3.000 et 7.000 tours par minute permet d'avoir une vitesse relative de 10.000 tours par minute (3000+7000) tout en ayant une vitesse absolue dans une tranche basse de l'intervalle de vitesse précité.

Cette turbine contrarotative comprend ainsi un rotor lent et un rotor rapide, le rotor lent entraînant la soufflante et le rotor rapide engrenant avec un réducteur mécanique à train épicycloïdal de type planétaire dont l'entrée et la sortie sont contrarotatives (couronne tournante, porte-satellites fixe, solaire tournant).

Le réducteur couple le rotor rapide et le rotor lent, permettant ainsi un transfert de puissance du rotor rapide vers le rotor lent. On profite des rendements supérieurs d'une turbine rapide tout en transférant une large part de la puissance de la turbine vers la soufflante sans transiter par un réducteur mais par un arbre.

Cette architecture est complexe de par son intégration mécanique : le réducteur mécanique est situé à l'aval de la turbomachine, radialement à l'intérieur d'un carter de stator appelé carter d'échappement.

Les arbres de la turbine contrarotative sont guidés en rotation par des paliers qui doivent être lubrifiés par de l'huile en fonctionnement. Le réducteur est également lubrifié par de l'huile.

Il est connu de loger des éléments à lubrifier d'une turbomachine dans une enceinte de lubrification dans laquelle est injectée de l'huile et dans laquelle règne un brouillard d'huile sous pression. Une enceinte de lubrification est en général délimitée entre au moins une paroi de rotor et au moins une paroi de stator, des joints d'étanchéité dynamique, par exemple à labyrinthe, étant situés entre ces parois et aux bornes de l'enceinte. Pour éviter des fuites d'huile hors de l'enceinte à travers les joints d'étanchéité, ces joints d'étanchéité sont pressurisés, c'est-à-dire que de l'air pressurisé est amené d'un côté du joint opposé à l'intérieur de l'enceinte, ce qui fait que cet air de pressurisation traverse le joint dynamique de l'extérieur vers l'intérieur de l'enceinte, et évite ainsi toute fuite d'huile de l'intérieur vers l'extérieur de l'enceinte. Une fuite d'huile serait très problématique car elle pourrait affecter la santé des rotors de la turbine et impacter les températures des enceintes. L'architecture présentée ci-dessus est également complexe par la mise en place des enceintes de lubrification du réducteur et des paliers de guidage en rotation des premier et second arbres de turbine notamment. Une des difficultés concerne la pressurisation des enceintes et en particulier l'acheminement de l'air pressurisé depuis sa zone de prélèvement dans la turbomachine jusqu'aux joints d'étanchéité des enceintes.

### Résumé de l'invention

La présente invention propose un perfectionnement à la technologie décrite ci-dessus, qui représente une solution simple, efficace et économique à au moins une partie des problèmes évoqués ci-dessus.

L'invention propose une turbomachine à turbine contrarotative pour un aéronef, comportant :
- un corps haute pression comprenant un rotor de compresseur haute pression et un rotor de turbine haute pression, ces rotors étant reliés par un arbre haute pression,
- une turbine basse pression contrarotative dont un premier rotor est configuré pour tourner dans un premier sens de rotation et est relié à un premier arbre de turbine, et un second rotor est configuré pour tourner dans un sens opposé de rotation et est relié à un second arbre de turbine, le premier rotor comportant des roues de turbine intercalées entre des roues de turbine du second rotor,

- un réducteur mécanique à train épicycloïdal de type planétaire qui comporte un solaire entraîné en rotation par ledit second arbre, une couronne entraînée en rotation par ledit premier arbre, et un porte-satellites fixé à un premier carter de stator de la turbomachine situé en amont de la turbine contrarotative par rapport à une direction d'écoulement des gaz dans la turbomachine,
- des premiers paliers de guidage dudit premier arbre, ces premiers paliers étant portés par au moins un support de palier fixé à un second carter de stator situé en aval de la turbine contrarotative,
   caractérisée en ce que ledit réducteur et lesdits premiers paliers sont logés dans une première enceinte de lubrification alimentée en huile et comportant des joints d'étanchéité dynamique,
   et en ce que la turbomachine comprend :
      - un premier circuit de pressurisation d'au moins un desdits joints d'étanchéité, le premier circuit étant configuré pour acheminer de l'air pressurisé depuis la périphérie externe du corps haute pression jusqu'à la périphérie externe dudit second carter, puis depuis la périphérie externe de ce carter jusqu'à sa périphérie interne et ledit au moins un desdits joints d'étanchéité, et
      - un second circuit de pressurisation d'au moins un autre desdits joints d'étanchéité, le second circuit étant configuré pour acheminer de l'air pressurisé depuis la périphérie interne du corps haute pression jusqu'à la périphérie interne dudit réducteur et ledit au moins un autre desdits joints d'étanchéité, en passant à l'intérieur de dudit second arbre.

Le réducteur et les premiers paliers sont ainsi situés dans une même enceinte de lubrification qui peut être rendue étanche par plusieurs joints d'étanchéité dynamique. Le nombre de ces joints est par exemple de 2, 3, 4, voire plus. Un joint dynamique est par exemple un joint à labyrinthe, un joint radial segmenté, etc.

Les bornes de cette enceinte sont pressurisées par deux circuits d'air indépendants, un premier circuit d'air pressurisé qui peut être considéré comme un circuit de pressurisation externe dans la mesure où il s'étend principalement à l'extérieur de la veine de turbine, et un circuit de pressurisation interne qui s'étend lui à l'intérieur de la veine de turbine.

Le premier circuit est conçu pour acheminer l'air pressurisé jusqu'à certains joints d'étanchéité de l'enceinte en traversant radialement le second carter, qui s'étend autour du réducteur et de l'enceinte. Le second circuit est conçu pour acheminer l'air pressurisé jusqu'aux autres joints d'étanchéité de l'enceinte.

La turbomachine selon l'invention peut comprendre une ou plusieurs des caractéristiques ci-dessous, prises isolément les unes des autres ou en combinaison les unes avec les autres :
- ledit premier circuit est configuré pour alimenter en air au moins un premier joint d'étanchéité, voire également un autre joint d'étanchéité ;
- ledit premier circuit comprend au moins un conduit d'air, de préférence calorifugé, traversant au moins un bras tubulaire dudit second carter ;
- le premier joint d'étanchéité est formé entre ledit premier arbre et un support annulaire d'un des premiers paliers de guidage du premier arbre, ledit premier circuit comportant des ouvertures traversantes formées dans ce support, ces ouvertures alimentant ledit premier joint et débouchant dans une cavité annulaire qui est entourée par ledit second carter et qui est en communication fluidique avec ledit au moins un conduit ;
- ledit autre joint d'étanchéité est formé entre ledit premier arbre ou un arbre basse pression accouplé à ce premier arbre, et un support annulaire d'un des premiers paliers de guidage du premier arbre, ledit premier circuit comportant des ouvertures traversantes formées dans ce support et alimentant cet autre joint ;
- ledit second circuit est configuré pour alimenter en air un deuxième joint d'étanchéité et un troisième joint d'étanchéité, voire également un quatrième joint d'étanchéité ;
- ledit second circuit comprend des ouvertures traversantes formés dans un élément de liaison dudit premier carter au porte-satellites du réducteur.
- ledit deuxième joint d'étanchéité est formé entre lesdits premier et second arbres de turbine, ledit second circuit comportant des ouvertures traversantes formées dans ce second arbre pour alimenter ce deuxième joint ;
- ledit troisième joint d'étanchéité est formé entre ledit premier arbre ou un arbre basse pression accouplé à ce premier arbre, et le porte-satellites du réducteur ou un élément solidaire de ce porte-satellites, ledit second circuit comportant des passages d'air formés dans le porte-satellites ou cet élément, ou entre le porte-satellites et cet élément pour alimenter ce troisième joint ;
- ledit quatrième joint d'étanchéité est formé entre ledit premier arbre ou un arbre basse pression accouplé à ce premier arbre, et un support annulaire d'un des premiers paliers de guidage du premier arbre ;
- ledit second circuit comprend au moins une ouverture traversante formée dans ledit arbre basse pression et/ou dans un arbre de soufflante accouplé à l'arbre basse pression et configuré pour entraîner une soufflante de la turbomachine, pour alimenter le quatrième joint ;
- ledit quatrième joint d'étanchéité n'est pas alimenté en air par le second circuit, un bouchon étant fixé à l'extrémité aval dudit arbre basse pression de façon à ce que le quatrième joint soit situé entre deux espaces annulaires destinés à être à une même pression en fonctionnement ;
- lesdits premier et second circuits sont configurés pour prélever de l'air en amont du compresseur haute pression ou dans ce compresseur haute pression ;
- la turbomachine comprend des seconds paliers de guidage dudit second arbre, ces seconds paliers étant portés par au moins un support de palier fixé audit premier carter de stator,
- lesdits seconds paliers sont logés dans une deuxième enceinte de lubrification alimentée en huile et comportant des joints d'étanchéité dynamique alimentés en air par ledit second circuit ; et
- ledit premier arbre est accouplé à un arbre basse pression qui est guidé en rotation par au moins un palier porté par un support annulaire fixé audit premier carter, ce palier étant logé dans une troisième enceinte de lubrification alimentée en huile et comportant des joints d'étanchéité dynamique alimentés en air par ledit second circuit.

Préférentiellement la turbomachine est du type à une unique soufflante carénée, le premier arbre entraînant en rotation cette unique soufflante.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue très schématique d'une turbomachine à turbine contrarotative selon l'invention,
[Fig.2] la figure 2 est une plus à plus grande échelle de la turbine contrarotative de la figure 1,
[Fig.3] la figure 3 est une vue similaire à celle de la figure 1 et montre des circuits de pressurisation d'enceintes de lubrification de la turbomachine,
[Fig.4] la figure 4 est une vue schématique en coupe axiale d'un mode de réalisation plus concret d'une turbomachine selon l'invention et montre également des circuits de pressurisation,
[Fig.5] la figure 5 est une vue à plus grande échelle d'une partie de la figure 4,
[Fig.6] la figure 6 est une vue à plus grande échelle d'une autre partie de la figure 4, et
[Fig.7] la figure 7 est une vue similaire à celle de la figure 4 et illustre une variante de réalisation.

### Description détaillée de l'invention

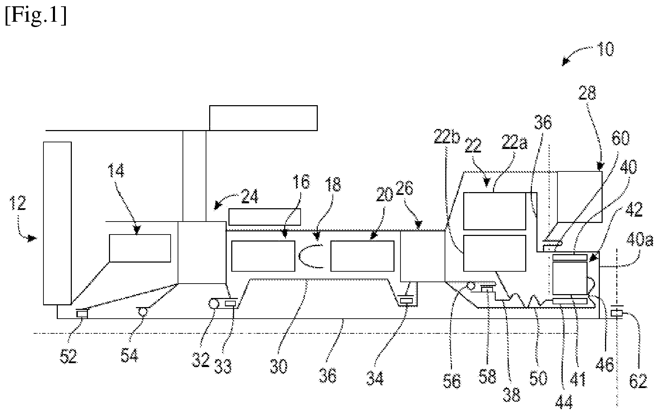

La figure 1 représente de manière très schématique une turbomachine 10 à turbine contrarotative pour un aéronef.

Cette turbomachine 10 comprend d'amont en aval, dans le sens d'écoulement des gaz, une soufflante 12, un compresseur basse pression 14, un compresseur haute pression 16, une chambre annulaire de combustion 18, une turbine haute pression 20 et une turbine contrarotative 22.

La référence 24 désigne un carter intermédiaire situé entre les compresseurs 14 et 16, et la référence 26 désigne un carter de turbine (du type TVF, acronyme de l'anglais Turbine Vane Frame qui désigné un carter de turbine équipé de bras formant des aubages de redresseur) situé entre les turbines 20 et 22. Enfin, la référence 28 désigne un carter d'échappement (du type TRF, acronyme de l'anglais Turbine Rear Frame qui désigne le dernier carter de turbine). Ces carters forment la structure de la turbomachine : ils supportent les paliers qui guident les arbres en rotation et sont liés aux suspensions de la turbomachine.

Le rotor de la turbine haute pression 20 entraîne en rotation le rotor du compresseur haute pression 16 par un arbre haute pression 30 qui est centré et guidé en rotation par des paliers, tels qu'un palier amont 32 à billes et un palier aval 34 à rouleaux. L'ensemble formé par les rotors de la turbine haute pression 20 et du compresseur haute pression 16, et l'arbre haute pression 30, forme un corps haute pression. Le palier 32 est monté entre une extrémité amont de l'arbre 30 et le carter intermédiaire 24, et le palier 34 est monté entre une extrémité aval de l'arbre 30 et le carter de turbine 26.

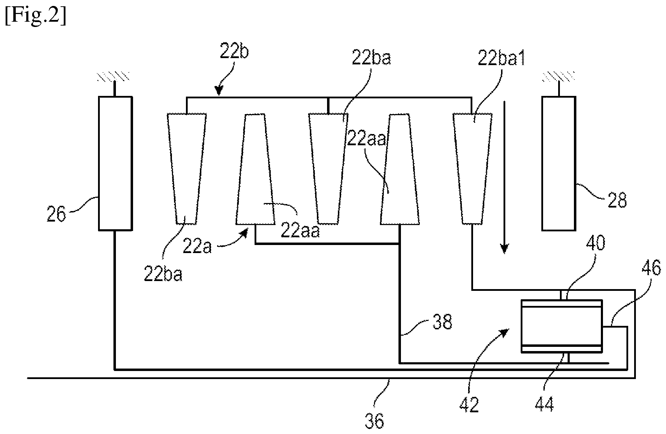

La turbine contrarotative 22 comprend un premier rotor 22a dont des roues 22aa sont configurées pour tourner dans un premier sens de rotation et sont reliées à un premier arbre de turbine 36, et un second rotor 22b dont des roues 22ba ont configurées pour tourner dans un sens opposé de rotation et sont reliées à un second arbre de turbine 38 et sont intercalées entre les roues du rotor 22a (cf. figure 2).

Chaque roue de turbine comprend une rangée annulaire de pales qui comportent chacune un profil aérodynamique comportant un intrados et un extrados qui se rejoignent pour former un bord d'attaque et un bord de fuite des gaz dans la veine de turbine.

Le premier arbre 36 entraine en rotation la soufflante 12 ainsi que le rotor du compresseur basse pression 14. Ce premier arbre 36 est en outre engrené avec une couronne 40 d'un réducteur mécanique 42 à train épicycloïdal de type planétaire.

Le second arbre 38 est engrené avec le solaire 44 ou planétaire du réducteur 42.

Le réducteur 42 comprend en outre des satellites 41 engrenés respectivement avec le solaire 44 et la couronne 40 et portés par un porte-satellites 46 qui est fixé au carter de turbine 26.

Chacun des carters 26 et 28 comprend en général un moyeu central, ainsi qu'un anneau extérieur qui entoure le moyeu et qui est relié à celui-ci par une série de bras sensiblement radiaux par rapport à l'axe longitudinal de la turbomachine et traversant la veine de turbine. Le moyeu central du carter 28 s'étend autour d'au moins une partie du réducteur 42.

Dans l'exemple représenté, l'arbre haute pression 30 est centré et guidé en rotation par deux paliers amont, respectivement à billes 32 et à rouleaux 33, et par un palier aval 34 à rouleaux. Les paliers 32, 33 sont montés entre une extrémité amont de l'arbre 30 et le carter intermédiaire 24, et le palier 34 est monté entre une extrémité aval de l'arbre 30 et le carter de turbine 26.

Le porte-satellites 46 du réducteur 42 est fixé au carter de turbine 26. Le porte-satellites 46 est ainsi relié au carter de turbine 26 par une paroi cylindrique 50 qui est avantageusement rigide. Cette paroi 50 traverse axialement les rotors 22a, 22b ainsi que le second arbre 38.

Le second arbre 38 a son extrémité aval engrenée avec le solaire, comme évoqué dans ce qui précède, et est en outre relié au dernier étage ou étage aval du second rotor 22b, c'est-à-dire à la dernière roue 22ba1 de ce rotor.

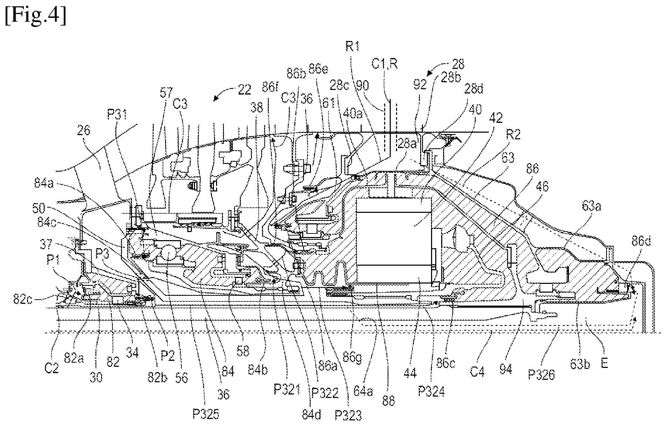

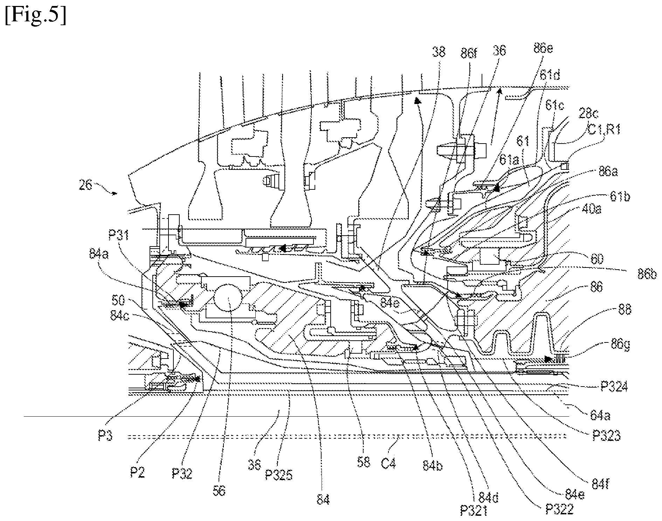

Le second arbre 38 est centré et guidé en rotation sur cette paroi 50 par l'intermédiaire de deux paliers de guidage, respectivement amont 56 et aval 58. Un exemple de réalisation de ces paliers 56, 58 plus en détail aux figures 4 et 5.

Le premier arbre 36 a son extrémité aval fixée à la couronne 40 du réducteur et son extrémité amont qui est fixée au dernier étage ou étage aval du premier rotor 22a, c'est-à-dire à la dernière roue de ce rotor. La couronne 40 est par ailleurs fixée à l'extrémité amont d'un porte-couronne 40a dont l'extrémité aval est fixée ou engrenée avec l'extrémité aval de l'arbre 36 qui est accouplé à l'arbre d'entraînement de la soufflante 12.

Le porte-satellites 46 peut comprendre, ici du côté aval du réducteur 42, une portion annulaire ayant une section en forme de C ou S de façon à conférer au porte-satellites une certaine souplesse par déformation élastique, en particulier en direction radiale ainsi qu'en basculement (souplesse en rotation autour des axes perpendiculaires à l'axe moteur). Du fait de cette souplesse apportée par le porte-satellites 46, le porte-couronne 40a du réducteur 42 peut être lui rigide. L'inverse est envisageable, sous certaines conditions. Dans ce cas, le porte-couronne 40a serait souple ou conférerait une souplesse, et le porte-satellites 46 serait rigide. Le porte-couronne 40a comprendrait alors une portion annulaire ayant une section en forme de C ou S de façon à conférer à la couronne une certaine souplesse par déformation élastique, en particulier en radial ainsi qu'en basculement (souplesse en rotation autour des axes perpendiculaires à l'axe moteur). Dans cette deuxième configuration, avantageusement on intègre la souplesse hors du chemin d'effort allant de l'extrémité aval du porte-couronne 40a jusqu'au palier 60.

L'arbre 36 est guidé à l'amont par des paliers 52, 54 montés entre cet arbre et le carter intermédiaire 24. Un premier de ces paliers est par exemple un palier amont à rouleaux 52, et un second de ces paliers est par exemple un palier aval à billes 54.

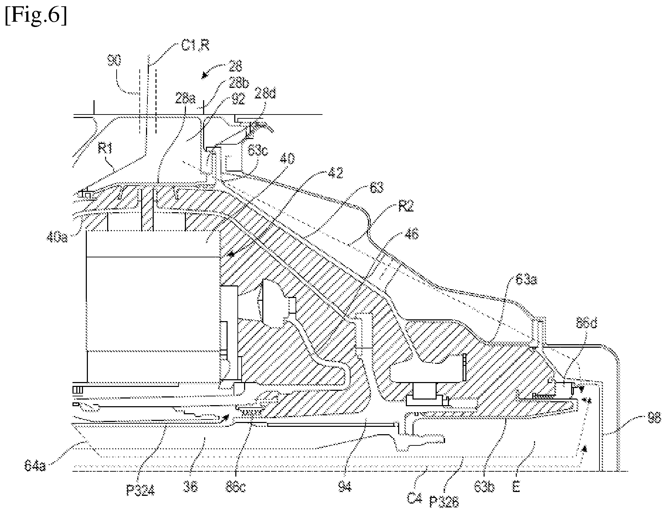

L'arbre 36 est en outre centré et guidé en rotation à l'aval par deux paliers de guidage, respectivement amont 60 et aval 62 tous les deux supportés par le carter d'échappement 28. Ces paliers sont avantageusement placés de part et d'autre du réducteur 42. Un exemple de réalisation de ces paliers 60, 62 représenté plus en détail aux figures 4 et 6.

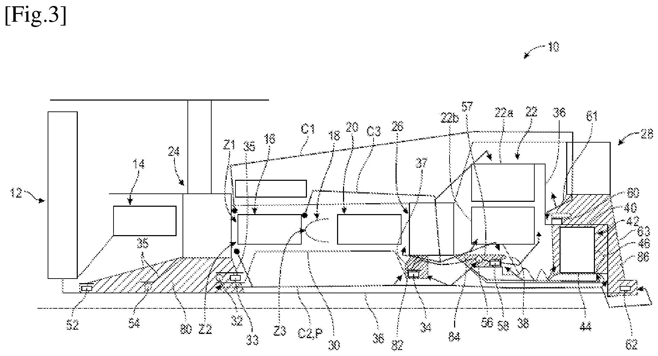

La figure 3 illustre des enceintes 80, 82, 84, 86 de lubrification du réducteur 42 et des paliers 32, 33, 34, 52, 54, 56, 58, 60, 62 de la turbomachine 10. Les paliers 32, 33, 52, 54 sont logés dans une même enceinte de lubrification 80 qui est située à l'amont de la turbomachine 10, et délimitée d'une part par des supports annulaires 35 des paliers 52, 54, 32, 33 et l'arbre 36. Ces supports annulaires 35 sont fixés au carter intermédiaire 24.

Le palier 34, par exemple à rouleaux, est logé dans une enceinte de lubrification 82 qui est située sensiblement au droit du carter 26, et délimitée par un support annulaire 37 de ce palier et l'arbre haute pression 30 (figure 4). Ce support annulaire 37 est fixé au carter 26. Cette enceinte 82 peut être rendue étanche à ses bornes par l'intermédiaire de deux joints annulaires 82a, 82b d'étanchéité dynamique, respectivement amont et aval, tels qu'un joint amont du type JRS (joint radial segmenté) et un joint aval à labyrinthe, comme cela est représenté aux figures 4 et 5. Ces joints sont avantageusement placés entre le support annulaire 37 et l'arbre haute pression 30.

Les paliers 56 et 58, par exemple respectivement à billes et à rouleaux, sont logés dans une enceinte de lubrification 84 qui est située entre le carter 26 et le réducteur 42 et qui est délimitée au moins par un support annulaire 57 de ces paliers et le second arbre de turbine 38. Cette enceinte 84 peut être rendue étanche à ses bornes par l'intermédiaire de deux joints annulaires 84a, 84b d'étanchéité dynamique, respectivement amont et aval, tels que des joints à labyrinthe, comme cela est représenté aux figures 4 et 5. Le joint annulaire amont 84a est avantageusement placé entre la pièce 50 et le second arbre de turbine 38. Le joint annulaire aval 84b est avantageusement placé entre le support annulaire 57 et le second arbre de turbine 38.

Le réducteur 42 et les paliers 60 et 62, par exemple à rouleaux, sont logés dans une enceinte de lubrification 86 qui est située au droit du carter 28, et qui est délimitée au moins par des supports annulaires 61, 63 de ces paliers. Cette enceinte 86 peut être rendue étanche à ses bornes par l'intermédiaire de plusieurs joints annulaires 86a-86d d'étanchéité dynamique, comme cela est représenté aux figures 4 et 6. Les références 86e et 86f désignent des purges.

La figure 3 illustre également les circuits C1, C2 de pressurisation des bornes des enceintes 80-86. Un premier circuit C1 de pressurisation s'étend principalement à l'extérieur de la veine de turbine, et un circuit C2 de pressurisation qui s'étend lui radialement à l'intérieur de la veine de turbine. Le circuit C1 est utilisé pour acheminer de l'air pressurisé à certains joints de l'enceinte 86, et plus précisément à un ou deux joints de l'enceinte 86. Ce circuit C1 comprend des moyens de prélèvement d'air pressurisé, de préférence en amont du compresseur haute pression 16, dans la zone Z1 de la figure 3. Cette zone Z1 est située à la périphérie externe de la veine d'écoulement dans le compresseur 16.

Le circuit C2 est utilisé pour acheminer de l'air pressurisé à au moins certains des joints des enceintes 80, 82 et 84 et est en outre utilisé pour acheminer de l'air pressurisé aux joints de l'enceinte 86 qui ne sont pas alimentés en air pressurisé par le circuit C1, et plus précisément un joint de l'enceinte 80, les deux joints de l'enceinte 82, les deux joints de l'enceinte 84 et trois à quatre joints de l'enceinte 86. Ce circuit C2 comprend des moyens de prélèvement d'air pressurisé, de préférence en amont du compresseur haute pression 16, dans la zone Z2. Cette zone Z2 est située à la périphérie interne de la veine d'écoulement dans le compresseur 16.

La figure 3 illustre un troisième circuit d'air C3.

Le compresseur de la turbomachine sert principalement à alimenter la chambre de combustion en air et on fait des prélèvements pour alimenter des systèmes secondaires : fourniture d'air à la cabine, dégivrage, pressurisation des enceintes, ventilation, purge, etc.

L'air circulant dans la veine est chaud et à forte pression dans les parties haute pression, il faut donc refroidir les éléments dans la veine et limiter les fuites en dehors de la veine vers certaines pièces ou enceintes ne pouvant pas résister à la chaleur. A chaque étage de turbine, l'air est détendu et sa chaleur diminue et devient plus acceptable dans les derniers étages. Pour faire la ventilation, un circuit de ventilation passe dans les carters traversant la veine et dans les aubes ce qui permet de les refroidir par convection. Les purges ont pour but d'éviter que de l'air de veine pénètre dans les cavités sous veines entre les aubes et les carter en opposant un flux de purge au niveau des jonctions entre aubes et carter.

Le besoin en pression et en débit pour la ventilation et la purge est plus important que pour pressurisation des enceintes vu leurs utilisations. Ces fonctions sont donc réalisées par le circuit spécifique C3 alimenté par les derniers étages de compresseur, là où la pression est la plus importante. Le circuit C3 comprend des moyens de prélèvement d'air pressurisé, de préférence en aval du compresseur haute pression 16, dans la zone Z3. Comme l'air est prélevé en aval du compresseur HP 16, il est à forte pression et permet de réaliser la purge entre les roues de la turbine pour éviter que de l'air de la veine de turbine ne rentre dans les cavités sous turbine. Cet air sert notamment à refroidir les rotors du compresseur haute pression et est réinjecté dans la veine, de préférence en amont de la dernière roue mobile de la turbine contrarotative 22 (figure 4), afin de réaliser la purge entre les dernières roues des turbines 22a et 22b.

On se réfère désormais aux figures 4 à 6 qui montrent un exemple plus concret de réalisation de l'invention, dans le cadre de la pressurisation des enceintes 82-86 situées à l'aval de la turbomachine 10.

En ce qui concerne l'enceinte 82, le circuit C2 est configuré pour acheminer l'air pressurisé prélevé P d'amont en aval entre l'arbre 36 et l'arbre haute pression 30. Une partie P1 de cet air traverse des ouvertures 82c formées dans l'arbre haute pression 30 pour alimenter le joint amont 82a, et une autre partie P2 de cet air alimente directement le joint aval 82b.

Le joint 82a est situé à l'amont du palier 34, entre un support et l'arbre haute pression 30. Le joint 82b est situé à l'aval du palier 34, entre le support 37 et l'arbre 30.

En ce qui concerne l'enceinte 84, une autre partie P3 de l'air acheminé par le circuit C2 est destinée à traverser des ouvertures 84c de la paroi 50 qui relie le carter 26 au porte-satellites 46 du réducteur 42. Cette partie P3 se subdivise pour donner une partie P31 qui alimente le joint amont 84a et une partie P32 qui se subdivise à nouveau en sous-parties dont une sous-partie P321 est destinée à traverser des ouvertures 84d du second arbre de turbine 38 pour rejoindre le joint aval 84b.

Le joint 84a est situé en amont des paliers 56, 58, entre le second arbre 38 ou un arbre accouplé à ce second arbre 38, et la paroi 50 précitée. Le joint 84a est situé juste en aval du carter 26, sensiblement au droit du joint 82b. Il est situé en amont du bord de fuite de la roue amont de turbine du rotor 22b. Le joint 84b est situé en aval des paliers 56, 58, entre le second arbre 38 et le support annulaire 57 de ces paliers. Le joint 84b est situé sensiblement au milieu de la turbine contrarotative 22, en amont du réducteur 42. Il est situé en aval du bord d'attaque de la roue aval de turbine du rotor 22b. L'enceinte huile est ainsi apte à contenir des paliers positionnés sous toutes les roues du rotor de turbine 22b.

L'enceinte 86 est plus complexe et délimitée par plusieurs organes entre lesquels sont situés plusieurs joints d'étanchéité dynamiques.

L'enceinte 86 est tout d'abord délimitée par le carter 28, ou une paroi 28a portée par ce carter 28. Ce carter 28 comprend des bras 28b s'étendant en aval de la veine de turbine et dont au moins un est tubulaire et reçoit dans sa cavité interne un conduit 90 d'acheminement d'air pressurisé du premier circuit C1. L'air prélevé est acheminé d'amont en aval par le circuit C1 et est noté R. Dans certaine configuration il peut y en avoir deux ou trois bras, avec autant de cavités et de conduits.

Les conduits 90 sont par exemple au nombre de trois et sont régulièrement répartis autour de l'axe de la turbomachine 10. Ils sont de préférence calorifugés pour éviter que l'air pressurisé soit chauffé par passage dans les bras 28b du carter 28.

La paroi 28a s'étend autour du réducteur 42 et radialement à l'intérieur des bras. Elle est fixée à l'amont, avec le support de palier 61, à une bride de fixation amont 28c du carter 28. Ce premier support 61 porte la bague externe du palier 60 dont la bague interne est fixée au premier arbre de turbine 36 fixée à la couronne 40 et au porte-couronne 40a du réducteur 42. A l'amont, l'enceinte 86 est délimitée par deux viroles 61a, 61b solidaires respectivement du support de palier 61 et de la bague externe du palier 60, et entre lesquels est prévu un joint d'étanchéité 86a à labyrinthe pressurisé par le premier circuit C1. Une partie R1 de l'air prélevé R est acheminée jusqu'à ce joint 86a en passant à travers des ouvertures 61c du support 61. Ces ouvertures 61c sont en communication fluidique avec les extrémités radialement internes des conduits 90 précités, par l'intermédiaire d'une cavité annulaire 92 de circulation d'air pressurisé prévue entre le carter 28 et la paroi 28a. La partie R1 peut en outre alimenter en air un autre joint d'étanchéité 86e à labyrinthe situé entre une autre virole amont 61d du support 61 et le premier arbre de turbine 36.

La cavité 92 est toutefois optionnelle. Les conduits 90 peuvent être directement raccordés aux ouvertures 61c. L'homogénéisation de l'air se fait alors au sein des conduits.

L'enceinte 86 est également délimitée par le premier arbre 36 et l'arbre d'entrée 88 du réducteur 42, qui s'étend entre le second arbre 38 et le solaire 44 du réducteur. Un joint d'étanchéité 86b à labyrinthe est situé entre les arbres 36, 38 ou entre les arbres 36, 88, et est alimenté en air pressurisé par une partie P322 du circuit C2. P322 représente l'une des subdivisions de la partie P32, qui, en plus de passer par les ouvertures 84d, passe par des ouvertures 84e et 84f du second arbre 38 (figure 5).

Les purges 86e et 86f, visibles notamment à la figure 5, définissent des débits de purge évitant que de l'air de veine ne pénètre dans l'enceinte 86. L'étanchéité 86e entre le carter d'échappement et le premier arbre 36 permet de faire transiter l'air du circuit C1 vers l'étanchéité 84b dans un espace entre le carter d'échappement et le premier arbre 36. L'air s'échappant de l'étanchéité 86e participe à la purge entre le dernier rotor de turbine 22a et le carter d'échappement 28. Avant d'arriver à l'étanchéité 84b, le circuit C1 transite dans un espace entre les arbres 36 et 38 circonscrit grâce à l'étanchéité 86f entre les arbres 36 et 38 puis le circuit C1 traverse en 84e le second arbre 38. L'ouverture 84e est en vis-à-vis de l'étanchéité 84b dans un espace circonscrit par une étanchéité entre le second arbre 38 et le support annulaire 57.

L'enceinte 86 est outre délimitée par une partie du porte-satellites 46 qui s'étend radialement à l'intérieur du réducteur 42 et de l'arbre d'entrée 88. Un joint dynamique 86g à segments est situé entre l'arbre d'entrée 88 et l'extrémité amont du porte-satellites 46 et est alimenté en air pressurisé par la subdivision P323 du circuit C2.

L'enceinte 86 est également délimitée par l'arbre 36 ou par un tourillon 94 accouplé à l'extrémité de cet arbre. Un joint dynamique 86c à labyrinthe est situé entre l'arbre 36 ou le tourillon 94, d'une part, et le porte-satellites 46, d'autre part.

Le tourillon 94 ou l'arbre 36 porte la bague interne du palier 62 dont la bague externe est portée par le support de palier 63 fixé, avec l'extrémité aval de la paroi 28a, à une bride annulaire aval 28d du carter 28. Ce support de palier 63 délimite l'enceinte 86 en aval du réducteur 42 et comprend une virole aval 63a qui s'étend jusqu'en aval du palier. Un joint d'étanchéité 86d du type JRS est situé entre l'extrémité aval de cette virole 63a et une autre virole 63b solidaire du tourillon 94 ou de l'arbre 36.

Le joint 86d peut être alimenté en air pressurisé, du côté aval, opposé à l'enceinte 86, de plusieurs manières.

Une première façon de pressuriser le joint 86d consiste à utiliser une partie R2 de l'air prélevé R du premier circuit 61 et à l'acheminer depuis la cavité 92 jusqu'à travers des ouvertures 63c du support de palier 63, puis jusqu'au joint 86d (traits pointillés R2 de la figure 6).

Une autre façon consiste à utiliser une autre subdivision de la partie P32, notée P325. Cette partie P325 comprend une subdivision P324 qui alimente le joint 86c et une autre subdivision P326 qui est destinée à traverser des ouvertures 64a de l'arbre 36 pour être ensuite acheminée jusqu'au joint 86d (cf. figures 4 à 6).

Enfin, une autre façon consiste à utiliser un autre circuit C4, dont l'air serait prélevé au niveau du compresseur basse pression 14, et qui serait acheminée d'amont en aval à l'intérieur de l'arbre 36 jusqu'au joint 86d. Dans ce cas, l'extrémité longitudinale aval de l'arbre 36 serait ouverte, comme illustrée aux figures 4 et 6, et déboucherait dans un espace annulaire délimitée extérieurement par la virole 63b et à l'aval par un capot 98 rapporté sur cette virole.

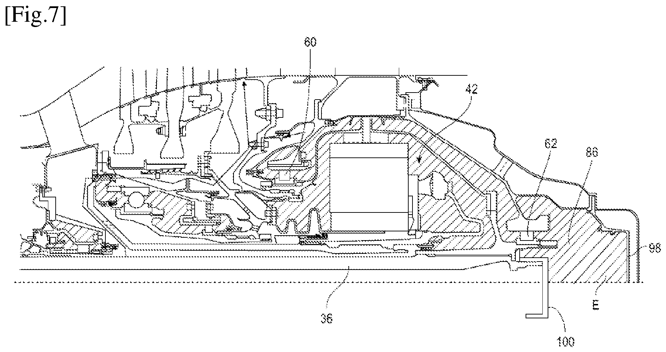

Dans la variante de réalisation représentée à la figure 7, le joint 86d serait supprimé. L'enceinte 86 serait alors à l'aval délimitée par la virole 63b, le capot 98, ainsi qu'un bouchon 100 rapporté et fixé sur l'extrémité aval de l'arbre 36 afin d'isoler de manière étanche l'espace E précité vis-à-vis de l'intérieur de l'arbre basse pression. L'espace E serait alors partie intégrante de l'enceinte 86.

Le choix du type d'enceintes est essentiel à l'architecture de la ventilation car il impacte directement les circuits qui devront ventiler les enceintes. Pour cela, il a été choisi une architecture du type non ventilé (« not vented ») pour les enceintes 82 et 84. En effet, les enceintes « not vented » sont dimensionnées sur un très faible débit d'air, ce qui permet de faire passer de l'air plus chaud aux bornes de l'enceinte mais aussi d'amener une plus faible quantité d'air et d'avoir par conséquent des sections de passage plus faible du circuit de pressurisation C2. De plus, vu qu'il n'y a pas de mise à l'air, on limite les pertes d'huile dans le déshuileur et la consommation d'huile du moteur. La contrepartie de l'enceinte « not vented » est de devoir dimensionner la pompe de récupération d'huile sur l'aspiration de l'air et de l'huile qu'il y a dans l'enceinte, donc d'avoir une très grosse pompe de récupération.

Pour l'enceinte 86, le choix d'enceinte est imposé par le nombre d'étanchéités de cette enceinte. L'enceinte « not vented » est faisable avec au maximum deux étanchéités aux bornes de l'enceinte. Au-delà, il faut intégrer une mise à l'air de l'enceinte. Conséquemment, l'enceinte 86 est une enceinte ventilé (« vented ») avec une mise à l'air passant par des bras du carter 28. Il est nécessaire que le débit du circuit C1 puisse être calibré par des perçages ou des tubes dont on peut contrôler les diamètres et dont la section de passage ne dépend pas du fonctionnement ni de l'état de détérioration de la turbomachine. C'est la raison pour laquelle l'air de ce circuit passe à travers aucune étanchéité, dont les sections de passage sont trop dépendantes de l'état de fonctionnement du moteur. Dans le cas de ce circuit C1, le réglage du débit s'effectue par les sections de passage situées sous le carter 28.

## Revendications

1. Turbomachine (10) à turbine contrarotative pour un aéronef, comportant :
- un corps haute pression comprenant un rotor de compresseur haute pression (16) et un rotor de turbine haute pression (20), ces rotors étant reliés par un arbre haute pression (30),
- une turbine basse pression contrarotative (22) dont un premier rotor (22a) est configuré pour tourner dans un premier sens de rotation et est relié à un premier arbre de turbine (36), et un second rotor (22b) est configuré pour tourner dans un sens opposé de rotation et est relié à un second arbre de turbine (38), le premier rotor comportant des roues de turbine intercalées entre des roues de turbine du second rotor,
- un réducteur mécanique (42) à train épicycloïdal de type planétaire qui comporte un solaire (44) entraîné en rotation par ledit second arbre (38), une couronne (40) entraînée en rotation par ledit premier arbre (36), et un porte-satellites (46) fixé à un premier carter de stator (26) de la turbomachine situé en amont de la turbine contrarotative (22) par rapport à une direction d'écoulement des gaz dans la turbomachine,
- des premiers paliers (60, 62) de guidage dudit premier arbre de turbine (36), ces premiers paliers étant portés par au moins un support de palier (61, 63) fixé à un second carter de stator (28) situé en aval de la turbine contrarotative,
**caractérisée en ce que** ledit réducteur (42) et lesdits premiers paliers (60, 62) sont logés dans une première enceinte de lubrification (86) alimentée en huile et comportant des joints d'étanchéité dynamique (86a-86d),
et **en ce que** la turbomachine comprend :
- un premier circuit de pressurisation (C1) d'au moins un desdits joints d'étanchéité (86a, 86d), le premier circuit étant configuré pour acheminer de l'air pressurisé depuis la périphérie externe du corps haute pression jusqu'à la périphérie externe dudit second carter (28), puis depuis la périphérie externe de ce carter jusqu'à sa périphérie interne et ledit au moins un desdits joints d'étanchéité, et
- un second circuit de pressurisation (C2) d'au moins un autre desdits joints d'étanchéité (86b, 86c, 86d), le second circuit étant configuré pour acheminer de l'air pressurisé depuis la périphérie interne du corps haute pression jusqu'à la périphérie interne dudit réducteur (42) et ledit au moins un autre desdits joints d'étanchéité, en passant à l'intérieur de dudit second arbre (38).

2. Turbomachine (10) selon la revendication 1, dans laquelle ledit premier circuit (C1) est configuré pour alimenter en air au moins un premier joint d'étanchéité (86a), voire également un autre joint d'étanchéité (86d).

3. Turbomachine (10) selon la revendication 1 ou 2, dans laquelle ledit premier circuit (C1) comprend au moins un conduit d'air (90), de préférence calorifugé, traversant au moins un bras tubulaire (28a) dudit second carter (28).

4. Turbomachine (10) selon l'ensemble des revendications 2 et 3, dans laquelle le premier joint d'étanchéité (86a) est formé entre ledit premier arbre (36) et un support annulaire (61) d'un des premiers paliers (60) de guidage du premier arbre (36), ledit premier circuit (C1) comportant des ouvertures (61d) traversantes formées dans ce support, ces ouvertures alimentant ledit premier joint (86a) et débouchant dans une cavité annulaire (92) qui est entourée par ledit premier carter et qui est en communication fluidique avec ledit au moins un conduit (90).

5. Turbomachine (10) selon l'ensemble des revendications 2 et 3, dans laquelle ledit autre joint d'étanchéité (86d) est formé entre ledit premier arbre (36) ou un arbre basse pression (36) accouplé à ce premier arbre de turbine, et un support annulaire (63) d'un des premiers paliers (62) de guidage du premier arbre (36), ledit premier circuit (C1) comportant des ouvertures (63c) traversantes formées dans ce support et alimentant cet autre joint.

6. Turbomachine (10) selon l'une des revendications 2 à 5, dans laquelle ledit second circuit (C2) est configuré pour alimenter en air un deuxième joint d'étanchéité (86b) et un troisième joint d'étanchéité (86c), voire également un quatrième joint d'étanchéité (86d).

7. Turbomachine (10) selon la revendication 6, dans laquelle ledit second circuit (C2) comprend des ouvertures (84c) traversantes formées dans un élément (50) de liaison dudit premier carter (26) au porte-satellites (46) du réducteur (42).

8. Turbomachine (10) selon la revendication 6 ou 7, dans laquelle ledit deuxième joint d'étanchéité (86b) est formé entre lesdits premier et second arbres de turbine (36, 38), ledit second circuit (C2) comportant des ouvertures (84d) traversantes formées dans ce second arbre (38) pour alimenter ce deuxième joint (86b).

9. Turbomachine (10) selon l'une des revendications 6 à 8, dans laquelle ledit troisième joint d'étanchéité (86c) est formé entre ledit premier arbre (36) ou un arbre basse pression accouplé à ce premier arbre de turbine, et le porte-satellites (46) du réducteur (42) ou un élément solidaire de ce porte-satellites, ledit second circuit (C2) comportant des passages d'air formés dans le porte-satellites ou cet élément, ou entre le porte-satellites et cet élément pour alimenter ce troisième joint (86c).

10. Turbomachine selon l'une des revendications 6 à 9, dans laquelle ledit quatrième joint d'étanchéité (86d) est formé entre ledit premier arbre (36) ou un arbre basse pression accouplé à ce premier arbre de turbine, et un support annulaire (63) d'un des premiers paliers (62) de guidage du premier arbre (36).

11. Turbomachine (10) selon la revendication 10, dans laquelle ledit second circuit (C2) comprend au moins une ouverture (64a) traversantes formée dans ledit arbre basse pression (36) et/ou dans un arbre de soufflante (12) accouplé à l'arbre basse pression et configuré pour entraîner une soufflante (12) de la turbomachine, pour alimenter le quatrième joint (86d).

12. Turbomachine (10) selon la revendication 10, dans laquelle ledit quatrième joint d'étanchéité n'est pas alimenté en air par le second circuit, un bouchon (100) étant fixé à l'extrémité aval dudit arbre basse pression (36) de façon à ce que le quatrième joint (86d) soit situé entre deux espaces annulaires destinés à être à une même pression en fonctionnement.

13. Turbomachine (10) selon l'une des revendications précédentes, dans laquelle lesdits premier et second circuits (C1, C2) sont configurés pour prélever de l'air en amont du compresseur haute pression (16) ou dans ce compresseur haute pression.

14. Turbomachine (10) selon l'une des revendications précédentes, dans laquelle elle comprend en outre des seconds paliers (56, 58) de guidage dudit second arbre (38), ces seconds paliers étant portés par au moins un support de palier (57) fixé audit premier carter de stator (26), lesdits seconds paliers (56, 58) étant logés dans une deuxième enceinte de lubrification (84) alimentée en huile et comportant des joints d'étanchéité dynamique (84a, 84b) alimentés en air par ledit second circuit (C1).

15. Turbomachine (10) selon l'une des revendications précédentes, dans laquelle ledit premier arbre (36) est accouplé à un arbre basse pression (36) qui est guidé en rotation par au moins un palier (34) porté par un support annulaire (37) fixé audit premier carter (26), ce palier étant logé dans une troisième enceinte de lubrification (82) alimentée en huile et comportant des joints d'étanchéité dynamique (82a, 82b) alimentés en air par ledit second circuit (C2).

## Patentansprüche

1. Turbomaschine (10) mit gegenläufiger Turbine für ein Flugzeug, umfassend:
- einen Hochdruckkörper, der einen Hochdruckkompressorrotor (16) und einen Hochdruckturbinenrotor (20) umfasst, wobei diese Rotoren über eine Hochdruckwelle (30) verbunden sind,
- eine gegenläufige Niederdruckturbine (22), bei der ein erster Rotor (22a) dazu ausgelegt ist, in einer ersten Drehrichtung zu drehen und mit einer ersten Turbinenwelle (36) verbunden ist, und ein zweiter Rotor (22b) dazu ausgelegt ist, in einer entgegengesetzten Drehrichtung zu drehen und mit einer zweiten Turbinenwelle (38) verbunden ist, wobei der erste Rotor Turbinenräder umfasst, die zwischen Turbinenrädern des zweiten Rotors eingefügt sind,
- ein mechanisches Untersetzungsgetriebe (42) mit Umlaufrädergetriebe vom Planetentyp, das ein Sonnenrad (44), das von der zweiten Welle (38) in Drehung versetzt wird, eine Krone (40), die von der ersten Welle (36) in Drehung versetzt wird, und einen Planetenträger (46) umfasst, der an einem ersten Statorgehäuse (26) der Turbomaschine befestigt ist, das sich in Bezug auf eine Abströmungsrichtung der Gase in der Turbomaschine stromaufwärts der gegenläufigen Turbine (22) befindet,
- erste Lager (60, 62) zur Führung der ersten Turbinenwelle (36), wobei diese ersten Lager von mindestens einem Lagerträger (61, 63) getragen werden, die an einem zweiten Statorgehäuse (28) befestigt ist, das sich stromabwärts der gegenläufigen Turbine befindet,
**dadurch gekennzeichnet, dass** das Untersetzungsgetriebe (42) und die ersten Lager (60, 62) in einer ersten Schmierkammer (86) untergebracht sind, die mit Öl versorgt wird und dynamische Dichtungen (86a-86d) umfasst, und dadurch, dass die Turbomaschine Folgendes umfasst:
- einen ersten Unterdrucksetzungskreis (C1) für mindestens eine der Dichtungen (86a, 86d), wobei der erste Kreis dazu ausgelegt ist, Druckluft ausgehend von dem Außenumfang des Hochdruckkörpers bis zum Außenumfang des zweiten Gehäuses (28), dann ausgehend von dem Außenumfang dieses Gehäuses bis zu seinem Innenumfang und der mindestens einen der Dichtungen zuzuführen, und
- einen zweiten Unterdrucksetzungskreis (C2) für mindestens eine andere der Dichtungen (86b, 86c, 86d), wobei der zweite Kreis dazu ausgelegt ist, Druckluft ausgehend von dem Innenumfang des Hochdruckkörpers bis zum Innenumfang des Untersetzungsgetriebes (42) und der mindestens einen anderen der Dichtungen durch das Innere der zweiten Welle (38) hindurch zuzuführen.

2. Turbomaschine (10) nach Anspruch 1, wobei der erste Kreis (C1) dazu ausgelegt ist, mindestens eine erste Dichtung (86a), sogar auch eine andere Dichtung (86d) mit Luft zu versorgen.

3. Turbomaschine (10) nach Anspruch 1 oder 2, wobei der erste Kreis (C1) mindestens eine, vorzugsweise wärmeisolierte, Luftleitung (90) umfasst, die mindestens einen rohrförmigen Arm (28a) des zweiten Gehäuses (28) durchquert.

4. Turbomaschine (10) nach der Gesamtheit der Ansprüche 2 und 3, wobei die erste Dichtung (86a) zwischen der ersten Welle (36) und einem ringförmigen Träger (61) eines der ersten Lager (60) zur Führung der ersten Welle (36) gebildet ist, wobei der erste Kreis (C1) durchgehende Öffnungen (61d) umfasst, die in diesem Träger gebildet sind, wobei diese Öffnungen die erste Dichtung (86a) versorgen und in einen ringförmigen Hohlraum (92) münden, der von dem ersten Gehäuse umgeben ist und der mit der mindestens einen Leitung (90) in strömungstechnischer Kommunikation steht.

5. Turbomaschine (10) nach der Gesamtheit der Ansprüche 2 und 3, wobei die andere Dichtung (86d) zwischen der ersten Welle (36) oder einer mit dieser ersten Turbinenwelle gekoppelten Niederdruckwelle (36), und einem ringförmigen Träger (63) eines der ersten Lager (62) zur Führung der ersten Welle (36) gebildet ist, wobei der erste Kreis (C1) durchgehende Öffnungen (63c) umfasst, die in diesem Träger gebildet sind und diese andere Dichtung versorgen.

6. Turbomaschine (10) nach einem der Ansprüche 2 bis 5, wobei der zweite Kreis (C2) dazu ausgelegt ist, eine zweite Dichtung (86b) und eine dritte Dichtung (86c), sogar auch eine vierte Dichtung (86d) mit Luft zu versorgen.

7. Turbomaschine (10) nach Anspruch 6, wobei der zweite Kreis (C2) durchgehende Öffnungen (84c) umfasst, die in einem Element (50) zur Verbindung des ersten Gehäuses (26) mit dem Planetenträger (46) des Untersetzungsgetriebes (42) gebildet sind.

8. Turbomaschine (10) nach Anspruch 6 oder 7, wobei die zweite Dichtung (86b) zwischen der ersten und der zweiten Turbinenwelle (36, 38) gebildet ist, wobei der zweite Kreis (C2) durchgehende Öffnungen (84d) umfasst, die in dieser zweiten Welle (38) gebildet sind, um diese zweite Dichtung (86b) zu versorgen.

9. Turbomaschine (10) nach einem der Ansprüche 6 bis 8, wobei die dritte Dichtung (86c) zwischen der ersten Welle (36) oder einer mit dieser ersten Turbinenwelle gekoppelten Niederdruckwelle, und dem Planetenträger (46) des Untersetzungsgetriebes (42) oder einem mit diesem Planetenträger fest verbundenen Element gebildet ist, wobei der zweite Kreis (C2) Luftdurchgänge umfasst, die im Planetenträger oder diesem Element, oder zwischen dem Planetenträger und diesem Element gebildet sind, um diese dritte Dichtung (86c) zu versorgen.

10. Turbomaschine nach einem der Ansprüche 6 bis 9, wobei die vierte Dichtung (86d) zwischen der ersten Welle (36) oder einer mit dieser ersten Turbinenwelle gekoppelten Niederdruckwelle, und einem ringförmigen Träger (63) eines der ersten Lager (62) zur Führung der ersten Welle (36) gebildet ist.

11. Turbomaschine (10) nach Anspruch 10, wobei der zweite Kreis (C2) mindestens eine durchgehende Öffnung (64a) umfasst, die in der Niederdruckwelle (36) und/oder in einer mit der Niederdruckwelle gekoppelten Gebläsewelle (12) gebildet ist und dazu ausgelegt ist, ein Gebläse (12) der Turbomaschine anzutreiben, um die vierte Dichtung (86d) zu versorgen.

12. Turbomaschine (10) nach Anspruch 10, wobei die vierte Dichtung nicht über den zweiten Kreis mit Luft versorgt wird, wobei ein Verschluss (100) derart am stromabwärtigen Ende der Niederdruckwelle (36) befestigt ist, dass sich die vierte Dichtung (86d) zwischen zwei ringförmigen Räumen befindet, die dazu vorgesehen sind, im Betrieb bei einem gleichen Druck zu sein.

13. Turbomaschine (10) nach einem der vorstehenden Ansprüche, wobei der erste und der zweite Kreis (C1, C2) dazu ausgelegt sind, Luft stromaufwärts des Hochdruckkompressors (16) oder in diesem Hochdruckkompressor zu entnehmen.

14. Turbomaschine (10) nach einem der vorstehenden Ansprüche, wobei sie weiter zweite Lager (56, 58) zur Führung der zweiten Welle (38) umfasst, wobei diese zweiten Lager von mindestens einem Lagerträger (57) getragen werden, die am ersten Statorgehäuse (26) befestigt ist, wobei die zweiten Lager (56, 58) in einer zweiten Schmierkammer (84) untergebracht sind, die mit Öl versorgt wird und dynamische Dichtungen (84a, 84b) umfasst, die von dem zweiten Kreis (C1) mit Luft versorgt werden.

15. Turbomaschine (10) nach einem der vorstehenden Ansprüche, wobei die erste Welle (36) mit einer Niederdruckwelle (36) gekoppelt ist, die von mindestens einem Lager (34), das von einem am ersten Gehäuse (26) befestigten ringförmigen Träger (37) getragen wird, drehend geführt wird, wobei dieses Lager in einer dritten Schmierkammer (82) untergebracht ist, die mit Öl versorgt wird und dynamische Dichtungen (82a, 82b) umfasst, die von dem zweiten Kreis (C2) mit Luft versorgt werden.

## Claims

1. A turbomachine (10) with counter-rotating turbine for an aircraft, comprising:
- a high-pressure body comprising a high-pressure compressor rotor (16) and a high-pressure turbine rotor (20), these rotors being connected by a high-pressure shaft (30),
- a low-pressure counter-rotating turbine (22), a first rotor (22a) of which is configured to rotate in a first direction of rotation and is connected to a first turbine shaft (36), and a second rotor (22b) of which is configured to rotate in an opposite direction of rotation and is connected to a second turbine shaft (38), the first rotor comprising turbine wheels interposed between turbine wheels of the second rotor,
- a mechanical reduction gear (42) with epicyclic gear train of the planetary type which comprises a sun gear (44) driven in rotation by said second shaft (38), a ring gear (40) driven in rotation by said first shaft (36), and a planet carrier (46) attached to a first stator casing (26) of the turbomachine located upstream of the counter-rotating turbine (22) with respect to a direction of flow of the gases in the turbomachine,
- first bearings (60, 62) for guiding said first turbine shaft (36), these first bearings being carried by at least one bearing support (61, 63) attached to a second stator casing (28) located downstream of the counter-rotating turbine,
**characterised in that** said reduction gear (42) and said first bearings (60, 62) are housed in a first lubrication chamber (86) fed with oil and comprising dynamic seals (86a-86d),
and **in that** the turbomachine comprises:
- a first circuit (C1) for pressurizing at least one of said seals (86a, 86d), the first circuit being configured to convey pressurized air from the external periphery of the high-pressure body to the external periphery of said second casing (28) and then from the external periphery of that casing to its internal periphery and said at least one of said seals, and
- a second circuit (C2) for pressurizing at least one other of said seals (86b, 86c, 86d), the second circuit being configured to convey pressurized air from the internal periphery of the high-pressure body to the internal periphery of said reduction gear (42) and said at least one other of said seals, passing within said second shaft (38).

2. The turbomachine (10) of claim 1, wherein said first circuit (C1) is configured to feed air to at least one first seal (86a), and possibly also to another seal (86d).

3. The turbomachine (10) according to claim 1 or 2, wherein said first circuit (C1) comprises at least one air conduit (90), preferably heat-insulated, passing through at least one tubular arm (28a) of said second casing (28).

4. The turbomachine (10) according to all of claims 2 and 3, wherein the first seal (86a) is formed between said first shaft (36) and an annular support (61) of one of the first bearings (60) for guiding the first shaft (36) said first circuit (C1) comprising through openings (61d) formed in this support, these openings feeding said first seal (86a) and opening into an annular cavity (92) which is surrounded by said second casing and which is in fluidic communication with said at least one conduit (90).

5. The turbomachine (10) according to all of claims 2 and 3, wherein said other seal (86d) is formed between said first shaft (36) or a low-pressure shaft (36) coupled to this first turbine shaft, and an annular support (63) of one of the first bearings (62) for guiding the first shaft (36), said first circuit (C1) comprising through openings (63c) formed in this support and feeding this other seal.

6. The turbomachine (10) according to any of claims 2 to 5, wherein said second circuit (C2) is configured to feed air to a second seal (86b) and a third seal (86c), or even also to a fourth seal (86d).

7. The turbomachine (10) of claim 6, wherein said second circuit (C2) comprises through openings (84c) formed in an element (50) for connecting said first casing (26) to the planet carrier (46) of the reduction gear (42).

8. The turbomachine (10) according to claim 6 or 7, wherein said second seal (86b) is formed between said first and second turbine shafts (36, 38), said second circuit (C2) comprising through openings (84d) formed in this second shaft (38) for feeding this second seal (86b).

9. The turbomachine (10) according to any one of claims 6 to 8, wherein said third seal (86c) is formed between said first shaft (36) or a low-pressure shaft coupled to this first turbine shaft, and the planet carrier (46) of the reduction gear (42) or an element integral with this planet carrier, said second circuit (C2) comprising air passages formed in the planet carrier or this element, or between the planet carrier and this element to feed this third seal (86c).

10. The turbomachine according to any of claims 6 to 9, wherein said fourth seal (86d) is formed between said first shaft (36) or a low-pressure shaft coupled to this first turbine shaft, and an annular support (63) of one of the first bearings (62) for guiding the first shaft (36).

11. The turbomachine (10) of claim 10, wherein said second circuit (C2) comprises at least one through opening (64a) formed in said low-pressure shaft (36) and/or in a fan shaft (12) coupled to the low-pressure shaft and configured to drive a fan (12) of the turbomachine, to feed the fourth seal (86d).

12. The turbomachine (10) according to claim 10, wherein said fourth seal is not fed with air from the second circuit, a cap (100) being attached to the downstream end of said low-pressure shaft (36) so that the fourth seal (86d) is located between two annular spaces intended to be at a same pressure during operation.

13. The turbomachine (10) according to any of the preceding claims, wherein said first and second circuits (C1, C2) are configured to collect air from upstream of the high-pressure compressor (16) or from this high-pressure compressor.

14. The turbomachine (10) according to one of the preceding claims, wherein it further comprises second bearings (56, 58) for guiding said second shaft (38), these second bearings being carried by at least one bearing support (57) attached to said first stator casing (26), said second bearings (56, 58) being housed in a second lubrication chamber (84) fed with oil and comprising dynamic seals (84a, 84b) fed with air from said second circuit (C1).

15. The turbomachine (10) according to one of the preceding claims, wherein said first shaft (36) is coupled to a low-pressure shaft (36) which is guided in rotation by at least one bearing (34) carried by an annular support (37) attached to said first casing (26), this bearing being housed in a third lubrication chamber (82) fed with oil and comprising dynamic seals (82a, 82b) fed with air from said second circuit (C2).
